(19) **Europäisches Patentamt / European Patent Office / Office européen des brevets**

(11) **EP 4 447 697 B1**

(12) **EUROPEAN PATENT SPECIFICATION**

(45) Date of publication and mention
of the grant of the patent:
**05.11.2025 Bulletin 2025/45**

(21) Application number: **22822428.3**

(22) Date of filing: **25.11.2022**

(51) International Patent Classification (IPC):
*A23G 9/04* (2006.01)   *A23G 9/20* (2006.01)
*A23G 9/32* (2006.01)   *A23G 9/46* (2006.01)
*A23G 9/52* (2006.01)

(52) Cooperative Patent Classification (CPC):
**A23G 9/04; A23G 9/20; A23G 9/32; A23G 9/46; A23G 9/52;** A23G 2220/02

(86) International application number:
**PCT/EP2022/083299**

(87) International publication number:
**WO 2023/110365 (22.06.2023 Gazette 2023/25)**

(54) **CONCENTRATED PREMIX FOR A PLANT-BASED FROZEN CONFECTION**

KONZENTRIERTE VORMISCHUNG FÜR GEFRORENES KONFEKT AUF PFLANZENBASIS

PRÉMÉLANGE CONCENTRÉ POUR UNE CONFISERIE CONGELÉE D'ORIGINE VÉGÉTALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.12.2021 EP 21214697**

(43) Date of publication of application:
**23.10.2024 Bulletin 2024/43**

(73) Proprietor: **MAGNUM IP HOLDINGS B.V.
1017 BM Amsterdam (NL)**

(72) Inventors:
• **ANSARI, Mansoor, Ahmed
6708 WH Wageningen (NL)**
• **MUÑOZ IBAÑEZ, Marta, Maria
6708 WH Wageningen (NL)**

(74) Representative: **Potter Clarkson
Chapel Quarter
Mount Street
Nottingham NG1 6HQ (GB)**

(56) References cited:
**EP-A1- 1 415 542     WO-A1-2020/187544
US-A- 2 619 422**

EP 4 447 697 B1

## Description

### Field of the invention

The invention relates to concentrated premixes for the manufacture of plant-based frozen confections. The concentrated premixes are oil-in water emulsions having a high total solids content.

### Background of the invention

Plant-based foods are a growing consumer trend, which is thought to be driven by increasing health and environmental consciousness. As a result, there is currently an increased consumer demand for frozen confections which are not based on dairy ingredients, and instead use plant-based alternatives.

The manufacture of frozen confections (such as ice cream) is an energy intensive process involving several stages, typically: mix preparation (which consists of dosing and mixing of the ingredients); pasteurization and homogenization; ageing; freezing and hardening. Each of these stages requires energy.

EP 1 415 542 A1 discloses am ice-cream dessert material and method for the preparation thereof.

The production of frozen confections with sought-after organoleptic properties involves emulsification of the fat so that it is present in the form of very small droplets. This is typically achieved using homogenization equipment, most commonly a valve-type homogenizer in which the mix is forced through a small valve under high pressure. The usage efficiency of the homogenization equipment is a significant contributing factor to the overall energy consumption of the manufacturing process.

Preparing a concentrated premix for a plant-based frozen confection is challenging for a number of reasons. In order to provide commercial plant-based frozen confection products it is necessary to match the quality of premixes obtained by the standard process (i.e. by a process wherein the premix is manufactured at a standard concentration and does not require dilution). In order to achieve this, the concentrated premix must be formulated and produced in such a way as to avoid undissolved stabilizers, protein aggregates, and large oil droplets. Finally, it must be possible to reliably manufacture the concentrated premix at scale. The present inventors have managed to overcome one or more of these challenges, and produce high-quality concentrated premixes that have a high solids content and which are suitable for the manufacture of plant-based frozen confections.

### Summary of the invention

In a first aspect, the invention relates to a concentrated premix for making a plant-based frozen confection, wherein the concentrated premix is an oil-in-water emulsion in liquid form comprising: fat in an amount of 8 wt% to 20 wt%; sugars in an amount of 42 wt% to 64 wt%; plant protein in an amount of 1.5 wt% to 5 wt%; stabilizer in an amount of 0.3 wt% to 1.2 wt%, wherein the stabilizer is selected from the group consisting of alginates, carrageenan, locust bean gum, guar gum, pectin, xanthan gum, sodium carboxymethyl cellulose, and mixtures thereof; and water in an amount of 16 wt% to 36 wt%.

The concentrated premix can simply be diluted with water to produce a premix for a plant-based frozen confection which contains all the ingredients in the appropriate proportions. Furthermore, the concentrated premix can be tailored in the dilution step by adding a small quantity of flavouring and/or colouring.

A further advantage is that the dilution step can occur at a location that is remote from the location where the concentrated premix is prepared. Since the concentrated premix is in the form of a liquid, it can conveniently be stored and/or shipped in an intermediate bulk container (IBC). Thus, in a second aspect the present invention also encompasses an intermediate bulk container containing the concentrated premix.

In a third aspect, the invention relates to a process for preparing the concentrated premix of the first aspect, the process comprising:

(a) preparing a mixture of aqueous solids sugars, plant protein, and stabilizer, wherein the mixture is prepared by:

(i) combining at least one of:
sugars, and/or plant protein with water; and then
(ii) adding stabilizer; and then
(iii) optionally adding any remaining sugars and/or plant protein;

(b) combining the mixture of aqueous solids with oil and emulsifying to form the concentrated premix.

In order to facilitate hydration of the stabilizer, the stabilizer is added after at least one of the more readily soluble ingredients has been combined with water. Preferably, the stabilizer is added after at least part of the sugars have been combined with the water, for example after sucrose has been dissolved by combining it with water.

The present inventors have surprisingly found that the concentrated premix can be prepared using a rotor-stator mixer to perform the emulsification step. This is advantageous because a rotor-stator mixer has a relatively compact factory footprint and good energy efficiency, as well as requiring a lower amount of capital outlay than high pressure homogenization equipment. In a fourth aspect, use of an apparatus comprising a rotor-stator mixing device for preparing the concentrated premix is envisaged.

**Detailed description of the invention**

The invention relates to a concentrated premix for making plant-based frozen confections.

The concentrated premix is an oil-in-water emulsion in liquid form. The concentrated premix is pumpable because is in liquid form, and thus easy to handle in subsequent processing steps (e.g. subsequent dilution steps). The concentrated premix contains all the ingredients necessary to make a plant-based frozen confection. With the exception of water, the ingredients are present in the concentrated premix in the appropriate proportions. As such, the concentrated premix only needs to be diluted with water to produce a premix for a plant-based frozen confection. Thus, it will be appreciated that the amount of the concentrated premix needed to manufacture a portion of frozen confection occupies a smaller volume than would be the case for a standard premix. This makes the concentrated premix more economical to store and transport.

An advantage of the concentrated premix of the present invention is that there is no need for it to have a very high fat content. High fat emulsions tend to require particular homogenisation conditions, which may necessitate special equipment, e.g. a Controlled Deformation Dynamic Mixer (CDDM) or Cavity Transfer Mixer (CTM). The concentrated premix comprises fat in an amount of 8 wt% to 20 wt%. Preferably the concentrated premix comprises at least 9 wt% fat, at least 10 wt% fat, at least 11 wt% fat, or even at least 12 wt% fat. Preferably the concentrated premix comprises no more than 19 wt% fat, no more than 18 wt% fat, or even no more than 17 wt% fat.

The fat is preferably vegetable fat (such as coconut oil, palm oil, palm kernel oil, or a mixture thereof). It is particularly preferred that the fat is coconut oil.

The concentrated premix comprises sugars in an amount of 42 wt% to 64 wt%. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides. Some ingredients commonly included in frozen confections may contribute to the amount of sugars. For example, corn syrup (sometimes called glucose syrup) - a mixture of monosaccharides, disaccharides and oligosaccharides - is included. However, maltodextrin (a mixture of polysaccharides) is not included.

As explained above, the concentrated premix only needs to be diluted with water to produce a premix for a plant-based frozen confection. High concentrations of sugars may contribute unwanted sweetness and/or calories to the frozen confection that is ultimately prepared from the concentrated premix (following dilution and freezing). Therefore, the concentrated premix comprises sugars in an amount of no more than 64 wt%, preferably no more than 62 wt%, no more than 60 wt%, or no more than 58 wt%. Conversely, low concentrations of sugars may be inappropriate if the frozen confection that is ultimately prepared from the concentrated premix is a scoopable product, since a low concentration of sugars tend to result in frozen confections with a high ice content. Therefore, the concentrated premix comprises sugars in an amount of at least 42 wt%, preferably at least 44 wt%, or at least 46 wt%.

The concentrated premix comprises plant protein in an amount of 1.5 wt% to 5 wt%. Preferably, the concentrated premix comprises plant protein in an amount of at least 1.6 wt%, at least 1.7 wt%, or at least 1.8 wt%. Preferably, the concentrated premix comprises plant protein in an amount of no more than 4 wt%, no more than 3 wt%, or even no more than 2.5 wt%.

Preferably the plant protein is pulse protein, cereal protein, or a mixture thereof. The plant protein is preferably selected from: bean protein, lentil protein, lupin protein, pea protein, soy protein, oat protein, wheat protein, rye protein, barley protein, rice protein, buckwheat protein, millet protein, and mixtures thereof. It is particularly preferred that the plant protein comprises pulse protein. The plant protein may additionally comprise cereal protein as well as pulse protein. Since the concentrated premix has a low water content, the plant protein is preferably provided in the form of a powder.

Where the plant protein is pulse protein, it is preferably selected from: bean protein, lentil protein, lupin protein, pea protein, soy protein, and mixtures thereof. For example, the pulse protein may comprise pea protein, soy protein, or a mixture thereof. It is particularly preferred that the pulse protein is pea protein. Where the plant protein is cereal protein, it is preferably selected from oat protein, wheat protein, rye protein, barley protein, rice protein, buckwheat protein, millet protein, and mixtures thereof.

As explained above, the concentrated premix only needs to be diluted with water to produce a premix for a frozen confection. As such, the ratio of plant protein:fat in the concentrated premix will be essentially the same as that of a premix for a frozen confection at a standard concentration (i.e. a premix which does not require dilution prior to being used to manufacture a frozen confection). The ratio of plant protein to fat in the concentrated premix is preferably 1:3 to 1:10, 2:7 to 1:7, or even 1:4 to 1:8.

The concentrated premix comprises stabilizer in an amount of 0.3 wt% to 1.2 wt%. Preferably, the concentrated premix comprises stabilizer in an amount of at least 0.35 wt%, at least 0.4 wt%, at least 0.45 wt%, or at least 0.5 wt%. Preferably, the concentrated premix comprises stabilizer in an amount of no more than 1.1 wt%, no more than 1.0 wt%, or even no more than 0.9 wt%.

The stabilizer is selected from the group consisting of alginates (E400-E405), carrageenan (E407), locust bean gum (E410), guar gum (E412), pectin (E440), xanthan gum (E415), sodium carboxymethyl cellulose (E466), and mixtures thereof. More preferably, the stabilizer is selected from the group consisting of carrageenan, locust bean gum, guar gum, xanthan gum, and mixtures thereof (e.g. a mixture of locust bean gum and carrageenan - with or without guar gum).

The concentrated premix preferably comprises emulsifier in an amount of 0.1 wt% to 2 wt%. Preferably the concentrated premix comprises emulsifier in an amount of at least 0.12 wt%, at least 0.13 wt%, or at least 0.15 wt%. Preferably the concentrated premix comprises emulsifier in an amount of no more than 1.7 wt%, no more than 1.5 wt%, or no more than 1.3 wt%. A single emulsifier or a mixture of emulsifiers may be used. For example, mono-/diglycerides (E471), which are commonly used as emulsifiers in frozen confections.

If the emulsion becomes too concentrated it may become difficult to handle in subsequent processing, in particular it may become difficult to pump. On the other hand, a low water activity can mean that the concentrated premix has a longer shelf-life. The concentrated premix comprises water in an amount of 16 wt% to 36 wt%. Preferably the concentrated premix comprises water in an amount of at least 17 wt%, at least 18 wt%, or at least 19 wt%. Preferably the concentrated premix comprises water in an amount of no more than 34 wt%, no more than 32 wt%, no more than 30 wt%, no more than 28 wt%, or even no more than 26 wt%. The concentrate premix of the present invention has a high total solids content. Since the concentrated premix comprises water in an amount of 16 wt% to 36 wt%, the total solids content of the concentrated premix is 64 wt% to 84 wt%. Preferably the total solids content of the concentrated premix is at least 68 wt%, at least 70 wt%, at least 72 wt%, or at least 74 wt%. Preferably the total solids content of the premix is no more than 83 wt%, no more than 82 wt%, or no more than 81 wt%. The total solids content of the concentrated premix affects the viscosity, with higher total solids leading to higher viscosity. This can be advantageous, since higher viscosities are associated with better oil droplet breakup. However, the power input required to achieve emulsification of the oil also increases with viscosity, and at very high viscosities there is a risk of the emulsification equipment being overloaded. Therefore, there is a need to balance these competing technical considerations.

The concentrated premix may optionally comprise non-nutritive sweetener, such as aspartame, acesulfame K, erythritol, sucralose, or one or more steviol glycosides such as rabaudioside A. Mixtures of two or more non-nutritive sweeteners may also be used.

The concentrated premix may optionally comprise one or more sugar alcohol(s). For example, erythritol, arabitol, glycerol, xylitol, sorbitil, mannitol, lactitol, maltitol, and mixtures thereof.

The concentrated premix may optionally comprise colours and/or flavours. Alternatively, such ingredients may be added when the concentrated premix is diluted.

An advantage of the concentrated premix is that it can be shipped to a remote location and then simply diluted with water at the remote location before being frozen in a conventional manner to produce a high quality frozen confection. As such, the finishing factory does not need to be equipped with a mix plant capable of handling and blending multiple powders. The concentrated premix can be shipped in any suitable container. Non limiting examples of containers include bottles, kegs, barrels, drums, and jerry cans.

Since the concentrated premix is in the form of a liquid, it can conveniently be stored and shipped in an intermediate bulk container (IBC). Both rigid IBCs and flexible IBCs are commercially available, and either is suitable for storing and/or shipping the concentrated premix. Thus the present invention also encompasses an intermediate bulk container containing the concentrated premix. Such IBCs will typically have a tank capacity of up to 2000 litres, for example 250 litres to 1500 litres, or even 500 litres to 1250 litres.

Alternatively, the concentrated liquid can be transported using a tanker truck. Tanker trucks usually comprise a cylindrical tank lying upon the body of the truck in an essentially horizontal manner. The tank will typically comprise multiple compartments and/or baffles to prevent load movement destabilizing the vehicle during transit. Tanker trucks are commonly described by their volume capacity. For example, smaller tanker trucks typically have a capacity of up to 11,000 litres, whilst larger tanker trucks can have capacities ranging from 20,000 litres to 44,000 litres. The tanker truck should be suitable for transporting food-grade material, and will typically be equipped with a pumping system to allow for loading and unloading of the liquid load.

The invention also relates to a process for preparing the concentrated premix, the process comprising:

(a) preparing a mixture of aqueous solids sugars, milk protein, and stabilizer, wherein the mixture is prepared by:

(i) combining at least one of:
sugars, and/or plant protein with water; and then
(ii) adding stabilizer; and then
(iii) optionally adding any remaining sugars and/or plant protein;

(b) combining the mixture of sugars, plant protein and stabilizer with oil and emulsifying to form the concentrated premix.

As explained above, the stabilizer is added after at least one of the more readily soluble ingredients has been combined with water in order to facilitate hydration of the stabilizer. Preferably, the stabilizer is added after combining at least a portion of the sugars with the water, for example after sucrose has been dissolved by combining it with water.

In addition, the present inventors have found that adding the plant protein before any of the other aqueous solids is advantages, as this results in better dispersion of the plant protein in the concentrated premix, and fewer protein aggregates. Thus the mixture of step (a) is preferably prepared by:

(i) combining at least a portion of the plant protein with water, then adding at least a portion of the sugars; and then
(ii) adding stabilizer; and then
(iii) optionally adding any remaining sugars and/or plant protein.

It is particularly preferred that all of the plant protein is combined with water in step (i).

As explained above, the stabilizer is added after at least one of the more readily soluble ingredients has been combined with water in order to facilitate hydration of the stabilizer. Preferably, the stabilizer is added after combining at least a portion of the sugars with the water, for example after sucrose has been dissolved by combining it with water. The order of addition to water when preparing the mixture of step (a) is preferably: plant protein; and then sucrose; and then stabilizer; and then other sugars (such as corn syrups).

Another way to think about facilitating hydration of the stabilizer is to consider the amount of aqueous solids that are added to the aqueous phase in step (a) before the stabilizer is added (i.e. the aqueous solids added in step (i) before the stabilizer is added in step (ii)). As used herein the term "aqueous solids" is used to refer to the solids that are added to the aqueous phase when preparing the concentrated premix. The aqueous solids comprise the sugars, the plant protein and the stabilizers. The aqueous solids do not include the solids that are added as part of the oil phase (which comprise the fat and the emulsifiers). Preferably from 40 wt% to 80 wt% of the aqueous solids are added before the stabilizer, more preferably from 42 wt% to 75 wt%, or even from 44 wt% to 70 wt%.

Preferably the sugars comprise sucrose, and the sucrose is added in step (i) before the stabilizer is added in step (ii). Preferably the sucrose is added after the plant protein.

It is advantageous to add at least some of the aqueous solids after the stabilizer has been added. Thus, it is preferred that step (iii) is included. Preferably a portion of the sugars are added in step (iii). For example, where the aqueous solids comprise sucrose, corn syrup, plant protein and stabilizer, the plant protein and sucrose are preferably added in step (i), the stabilizer is added in step (ii), and the corn syrup is preferably added in step (iii). Alternatively, plant protein may be added in step (i), the stabilizer added in step (ii), and the sugars (i.e. the sucrose and corn syrup) may be added in step (iii).

The emulsification step may be performed by any suitable equipment. The present inventors have found that the concentrated premix of the present invention can be prepared using a rotor-stator mixer to perform the emulsification step. This is advantageous because a rotor-stator mixer has a relatively compact factory footprint and good energy efficiency, as well as requiring a lower amount of capital outlay than high pressure homogenization equipment. Thus, use of an apparatus comprising a rotor-stator mixing device for preparing the concentrated premix is envisaged.

The high solids content of the concentrated premix means that the efficiency of the emulsification step is increased. This is because for each portion of frozen confection produced, a smaller volume of liquid is passed through the emulsification equipment. This means that more confections can be produced per unit volume of premix which passes through the emulsification equipment, and/or that less energy is used per confection.

A concentrated premix is obtainable by the process set out above.

As mentioned above, the concentrated premix can simply be diluted with water to produce a premix for a frozen confection which contains all the ingredients in the appropriate proportions. Preferably the dilution of the concentrated premix to prepare a premix comprises combining the concentrated premix with water, such that the ratio of concentrated premix to water is 1:1 to 1:3, or even 1:1 to 1:2.

The premix (in its diluted form) can be frozen to produce a plant-based frozen confection. As such a process for preparing a plant-based frozen confection, wherein the concentrated premix is diluted with water and frozen is envisaged. The concentrated premix can be tailored in the dilution step by optionally adding a small quantity of flavouring and/or colouring.

The final frozen confection is preferably aerated, meaning that gas has been intentionally incorporated into the frozen confection premix, for example by mechanical means. The gas is preferably, a food-grade gas such as air, nitrogen, nitrous oxide, or carbon dioxide. Hence the term aeration is not limited to aeration using air. The extent of aeration is measured in terms of 'overrun' (with unit '%'), which is defined as:

$$overrun = \frac{\text{volume of aerated product - volume of initial mix}}{\text{Volume of initial mix}} \times 100\%$$

Preferably the frozen confection has an overrun of from 10% to 200%. More preferably the frozen confection has an overrun of 20% to 190%, 30% to 180%, 40% to 170%, 50% to 160%, 60% to 150%, 70% to 140%, 80% to 130, or even 90% to 120%.

As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

As used herein the term plant-based means that the frozen confection is formulated primarily from plant-derived ingredients. Nevertheless, it will be appreciated that the plant-based frozen confection may be fortified with vitamins and/or minerals or flavoured with ingredients (such as honey) which are not strictly speaking derived from plants. Preferably at least 98% by dry weight of the ingredients are derived from plants, more preferably at least 99%, at least 99.5%, at least 99.9%, most preferably 100% by dry weight of the ingredients are derived from plants. In particular, it is preferred that the frozen confection is essentially free of animal-derived ingredients, and thus comprises animal-derived ingredients in an amount of less than 0.1 wt%, preferably less than 0.05 wt%, more preferably less than 0.01 wt%.

Unless otherwise specified, numerical ranges expressed in the format "from x to y" are understood to include x and y, and in specifying any range of values or amounts, any particular upper value or amount can be associated with any particular lower value or amount.

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

**Figures**

By way of example, the present invention is illustrated with reference to the following figures, in which:

Figure 1 shows experimental data from Example 1, wherein Figure 1a is a plot of oil droplet size distribution, and Figure 1b is a plot of meltdown data.

Figure 2 shows experimental data from Example 2, wherein Figure 2a is a plot of viscosity data, Figure 2b is a plot of oil droplet size distribution, and Figures 2c and 2d show confocal microscope images.

**Examples**

The examples are intended to illustrate the invention and are not intended to limit the invention to those examples *per se*.

**Example 1**

Preparation of a concentrated premix

A concentrated premix having the formulation shown in Table 1 was prepared as follows:

*Aqueous phase:*

Hot water at 80°C was added to a mixing vessel, followed by the pea protein and then the sucrose. The contents were mixed to ensure dispersion/dissolution of the pea protein and sucrose. The stabilizer was then added, and once the stabilizer had been hydrated, the corn syrups and salt were added, with further mixing. The mixer was set at 3000 rpm during aqueous phase ingredient addition.

*Oil phase:*

The coconut oil was melted and combined with the emulsifiers.

*Oil-in water emulsion:*

The oil phase was added to the aqueous phase and emulsified by passing through a rotor-stator mixer set at 4200 rpm. The rotor-stator mixer had a rotor diameter of 0.145 m and a shearing clearance of 0.5 mm. The concentrated premix was pasteurized and stored at 4°C.

Table 1: concentrated premix formulation

| Ingredient | Amount (wt%) |
|---|---|
| Coconut oil | 15.5 |
| Sucrose | 27.7 |
| Pea protein (85% protein) | 2.3 |
| Corn syrup (DE28) | 20.3 |
| Corn syrup (DE63, 78% solids) | 13.9 |
| Stabilizers (E407, E410, E412) | 0.6 |
| Emulsifiers (E417) | 0.2 |
| Salt | 0.3 |
| Water | 19.2 |
| Total sugars | 58.9 |
| Ratio of pea protein:fat | 1:8 |

Dilution of the concentrated premix

The concentrated premix was combined with water (approximate ratio of concentrated premix to water: 1:1) to provide a premix comprising the ingredients at a standard dilution (premix A). The resulting premix was stored at 4°C.

Preparation of a conventional premix (premix B)

A conventional plant-based frozen confection premix (premix B) having an identical composition to premix A was prepared. Briefly, the aqueous solids were combined and mixed at 3000 rpm with heating at 60°C to 75°C, followed by addition of the oil phase (with mixing at 4800 rpm), and emulsification using a two-stage valve-type homogenizer operating at pressures of 250 bar and 30 bar in the first and second stages, respectively. The resulting premix was stored at 4°C.

Premix properties

*Oil droplet size distribution*

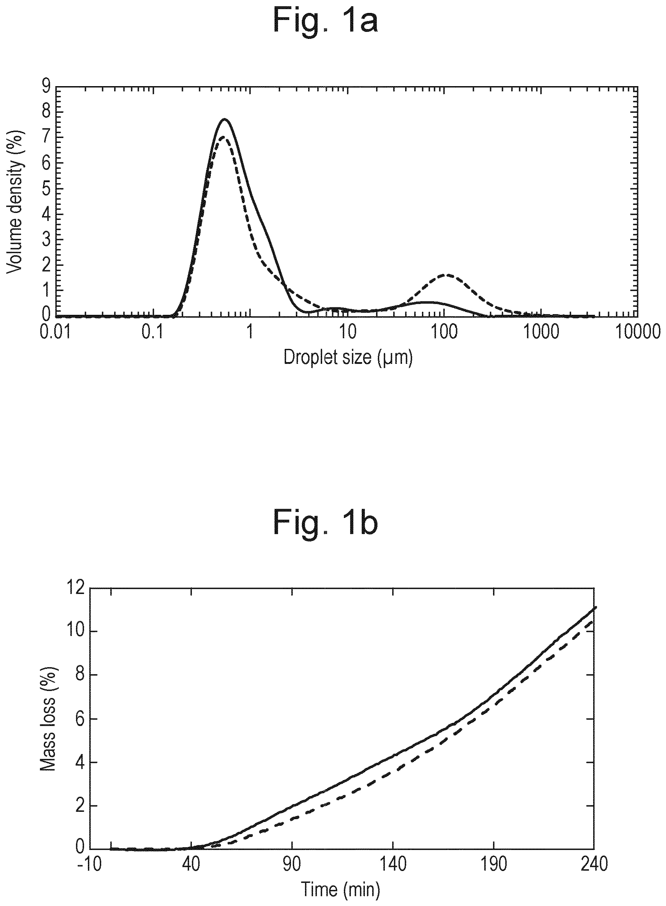

Oil droplet size distribution was measured using a Malvern Mastersizer 3000 equipped with a wet dispersion unit to determine surface weighted mean droplet size ($D_{3,2}$). The premix samples were diluted 10-fold in a solution of sodium dodecyl sulphate (SDS) and urea (6.6 M urea, 0.1% SDS, pH 7), and subjected to 1 minute of full power sonication within the dispersion unit prior to the start of particle size measurement. This treatment ensures that any weakly bound or flocculated oil droplets are separated into individual oil droplets to give a more accurate representation of the oil droplet size (such treatment cannot break up fully coalesced or aggregated oil droplets).
The oil droplet size distribution data is shown in Figure 1a, where the dashed line is premix A and the solid line is premix B. The results show that oil droplet size distribution of both premixes is very similar, with both having a well-defined peak corresponding to an oil droplet size of less than 1 $\mu$m.

Preparation of a frozen confection from the concentrated premix (Product A)

The concentrated premix was combined with water (approximate ratio of concentrated premix to water: 1:1) to provide a premix comprising the ingredients at a standard dilution (premix A). The resulting premix was aged for 24 hours at 4°C, before being frozen and aerated in a scraped surface heat exchanger (standard ice crem freezer). The air input was controlled to give and overrun of 65%, and freezing was controlled to give a target extrusion temperature of -6°C. The frozen product was hardened in a blast freezer, and then stored in a standard domestic freezer.

Preparation of a frozen confection from a conventional premix (Product B)

The conventional premix was aged for 24 hours at 4°C, before being frozen and aerated in a scraped surface heat exchanger (standard ice crem freezer). The air input was controlled to give and overrun of 65%, and freezing was controlled to give a target extrusion temperature of -6°C. The frozen product was hardened in a blast freezer, and then stored in a standard domestic freezer.

Properties of the frozen confections

The meltdown properties of Product A and Product B were compared. Rectangular blocks of each product (approximately 8 cm x 4 cm x 16 cm, 500 ml) were equilibrated at -22°C, weighed and then added to the centre a grated metal plate (20 cm diameter, 0.3 cm pore size) suspended above a mass balance (accurate to 4 decimal places). Samples were analysed in a temperature-controlled cabinet at 22°C, with the mass of the melted product that passed through the grating being recorded over a 4 hour time period. Figure 1b shows a plot of meltdown data (percentage mass loss as a function of time, mean of 3 experiments), where the dashed line is Product A and the solid line is Product B. The results show that the meltdown properties of the ice cream prepared from the concentrated premix was acceptable when compared to ice cream prepared using a conventional premix.

## Example 2

A concentrated premix having the formulation shown in Table 1 was prepared as described in Example 1, with the following modifications:

*Aqueous phase of concentrated premix 1:*

Prepared in the same way as described in Example 1.

*Aqueous phase of concentrated premix 2:*

Hot water at 80°C was added to a mixing vessel, followed by the sucrose and corn syrups. The contents were mixed to ensure complete dissolution of the sugars. The stabilizer was then dispersed into the solution. Once the stabilizer had been hydrated, the pea protein was added, with further mixing.

Premix properties

*Mix viscosity*

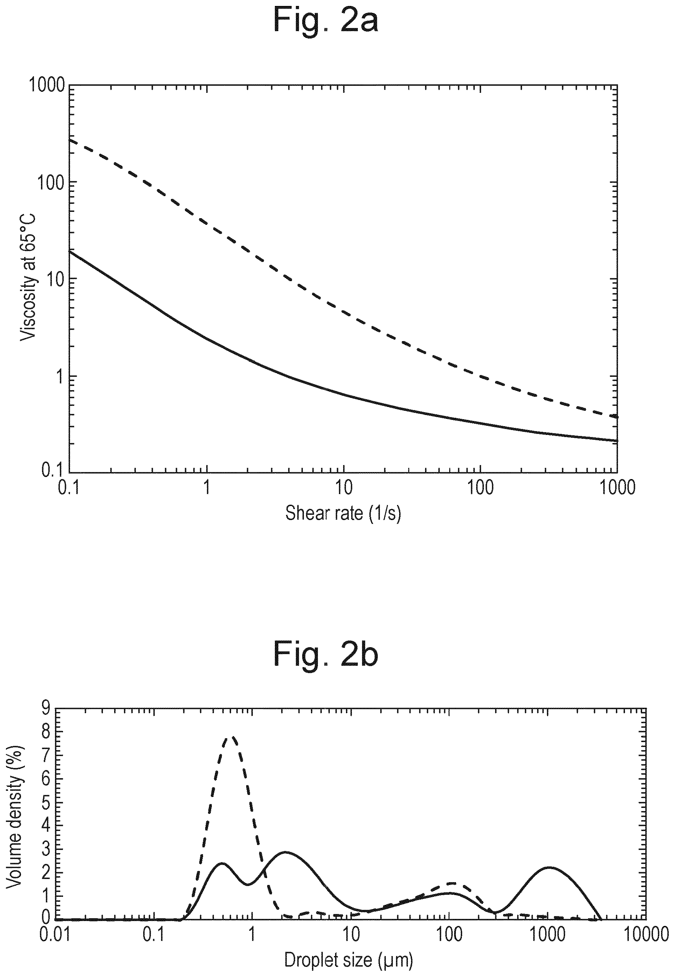

To determine whether or not the rheology of the premix was suitable for factory production, viscosity measurements were obtained. Mix viscosities were measured at different shear rates in 17 mm profiled rheology cups using an Anton Paar Physica MCR501 rheometer. During the measurement, the temperature was maintained at 65°C. A 17 mm profiled bob geometry was immersed in the sample. The sample was equilibrated for 10 minutes. A shear rate sweep was then conducted on the sample using the following measurement profile: shear rate range between 0.001 and 1000 s$^{-1}$ (logarithm spacing), with measurement point duration between 100 and 30 s, and slope of 5 points per decade. The viscosity data for each sample was plotted against the shear rate using a log-log plot.
The viscosity plots are shown in Figure 2a, where the dashed line is concentrated premix 1 and the solid line is concentrated premix 2. The results show that adding the plant protein at an earlier point during premix production results in an increase in viscosity. The inventors believe that this is due to more efficient hydration/activation of the plant protein.

*Oil droplet size distribution*

Oil droplet size distribution was measured as described in Example 1. The concentrated premix samples were diluted immediately after preparation. The oil droplet size distribution data is shown in Figure 2b, where the dashed line is concentrated premix 1 and the solid line is concentrated premix 2. The results show that concentrated premix 1 has an oil droplet size distribution that is characteristic of an emulsion comprising small, distributed oil droplets. In contrast, concentrated premix 2 has a very different oil droplet size distribution, with a considerable number of large oil droplets. This is undesirable, since the production of frozen confections with excellent organoleptic properties relies on any fat in the premix being emulsified such that it is in the form of very small oil droplets (i.e. as is the case for concentrated premix 1).

*Confocal microscopy*

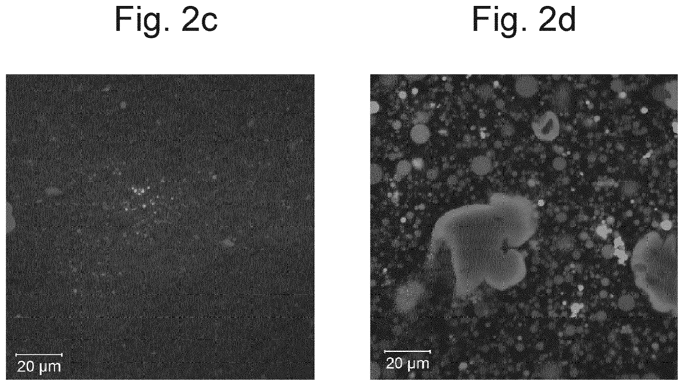

Confocal microscopy was used to visualise the distribution of fat and protein within the premixes. Aliquots of 1 mL of the premixes were placed into 7 mL Sterilin pots with 20 $\mu$L of 0.1% Nile Blue stain. After gentle mixing ~0.5 mL was placed on a coverslip for confocal imaging. Samples were imaged on the Zeiss LSM 780 confocal microscope in channel mode. Images were captured with ZEN Black software. Confocal images of concentrated premix 1 and concentrated premix 2 are shown in Figures 2c and 2d, respectively. As can be seen from Figure 2c, the emulsion of concentrated premix 1 consists of small oil droplets and dispersed protein. In contrast, the emulsion of concentrated premix 2 contains large oil droplets and protein aggregates (Figure 2d).

**Claims**

1. A concentrated oil-in-water emulsion for making a plant-based frozen confection, wherein the concentrated premix is an oil-in-water emulsion in liquid form comprising:

   • fat in an amount of 8 wt% to 20 wt%
   • sugars in an amount of 42 wt% to 64 wt%;
   • plant protein in an amount of 1.5 wt% to 5 wt%;
   • stabilizer in an amount of 0.3 wt% to 1.2 wt%, wherein the stabilizer is selected from the group consisting of alginates, carrageenan, locust bean gum, guar gum, pectin, xanthan gum, sodium carboxymethyl cellulose, and mixtures thereof;
   • water in an amount of 16 wt% to 36 wt%.

2. The concentrated premix as claimed in claim 1, wherein the concentrated premix comprises fat in an amount of 10 wt% to 18 wt%.

3. The concentrated premix as claimed in claim 1 or claim 2, wherein the concentrated premix comprises sugars in an amount of 42 wt% to 60 wt%.

4. The concentrated premix as claimed in any one of claims 1 to 3, wherein the plant protein is selected from: bean protein, lentil protein, lupin protein, pea protein, soy protein, oat protein, wheat protein, rye protein, barley protein, rice protein, buckwheat protein, millet protein, and mixtures thereof.

5. The concentrated premix as claimed in any one of claims 1 to 4, wherein the concentrated premix additionally comprises emulsifier in an amount of 0.1 wt% to 2 wt%.

6. The concentrated premix as claimed in any one of claims 1 to 5, wherein the concentrated premix comprises water in an amount of 18 wt% to 30 wt%.

7. The concentrated premix as claimed in any one of claims 1 to 6, wherein the ratio of plant protein to fat is 1:3 to 1:10.

8. An intermediate bulk container containing the concentrated premix as claimed in any one of claims 1 to 7, wherein the intermediate bulk container has a tank capacity of up to 2000 litres.

9. A process for preparing a concentrated premix as claimed in any one of claims 1 to 7, the process comprising:

   (a) preparing a mixture of sugars, plant protein, and stabilizer, wherein the mixture is prepared by:

(i) combining at least one of:
sugars, and/or plant protein with water; and then
(ii) adding stabilizer; and then
(iii) optionally adding any remaining sugars and/or plant protein;

(b) combining the mixture of sugars, plant protein and stabilizer with fat and emulsifying to form the concentrated premix.

10. The process as claimed in claim 9, wherein the mixture of step (a) is prepared by:

(i) combining at least a portion of the plant protein with water, then adding at least a portion of the sugars; and then
(ii) adding stabilizer; and then
(iii) optionally adding any remaining sugars and/or plant protein.

11. The process as claimed in claim 9 or claim 10, wherein all of plant protein is combined with water in step (i).

12. A process for preparing a plant-based frozen confection, wherein the concentrated premix as claimed in any one of claims 1 to 7 is diluted with water and frozen.

13. The process as claimed in claim 12, wherein the ratio of concentrated premix to water is 1:1 to 1:3.

14. Use of an apparatus comprising a rotor-stator mixing device for preparing a concentrated premix as claimed in any one of claims 1 to 7.

**Patentansprüche**

1. Konzentrierte Öl-in-Wasser-Emulsion zur Herstellung eines gefrorenen Konfekts auf Pflanzenbasis, wobei die konzentrierte Vormischung eine Öl-in-Wasser-Emulsion in flüssiger Form ist, umfassend:

• Fett in einer Menge von 8 bis 20 Gew.-%;
• Zucker in einer Menge von 42 bis 64 Gew.-%;
• Pflanzenprotein in einer Menge von 1,5 bis 5 Gew.-%;
• Stabilisator in einer Menge von 0,3 bis 1,2 Gew.-%, wobei der Stabilisator aus der Gruppe ausgewählt ist, bestehend aus Alginaten, Carrageen, Johannisbrotkernmehl, Guargummi, Pektin, Xanthangummi, Natriumcarboxymethylcellulose und Mischungen davon;
• Wasser in einer Menge von 16 bis 36 Gew.-%.

2. Konzentrierte Vormischung nach Anspruch 1, wobei die konzentrierte Vormischung Fett in einer Menge von 10 bis 18 Gew.-% umfasst.

3. Konzentrierte Vormischung nach Anspruch 1 oder Anspruch 2, wobei die konzentrierte Vormischung Zucker in einer Menge von 42 bis 60 Gew.-% umfasst.

4. Konzentrierte Vormischung nach irgendeinem der Ansprüche 1 bis 3, wobei das Pflanzenprotein unter Bohnenprotein, Linsenprotein, Lupinenprotein, Erbsenprotein, Sojaprotein, Haferprotein, Weizenprotein, Roggenprotein, Gerstenprotein, Reisprotein, Buchweizenprotein, Hirseprotein und Mischungen davon ausgewählt ist.

5. Konzentrierte Vormischung nach irgendeinem der Ansprüche 1 bis 4, wobei die konzentrierte Vormischung zusätzlich Emulgator in einer Menge von 0,1 bis 2 Gew.-% umfasst.

6. Konzentrierte Vormischung nach irgendeinem der Ansprüche 1 bis 5, wobei die konzentrierte Vormischung Wasser in einer Menge von 18 bis 30 Gew.-% umfasst.

7. Konzentrierte Vormischung nach irgendeinem der Ansprüche 1 bis 6, wobei das Verhältnis von Pflanzenprotein zu Fett 1:3 bis 1:10 beträgt.

8. Schüttgutzwischenbehälter, der die konzentrierte Vormischung nach irgendeinem der Ansprüche 1 bis 7 enthält, wobei der Schüttgut-Zwischenbehälter ein Fassungsvermögen von bis zu 2000 Litern aufweist.

9. Verfahren zur Herstellung einer konzentrierten Vormischung nach irgendeinem der Ansprüche 1 bis 7, wobei das Verfahren umfasst:

   (a) Zubereitung einer Mischung aus Zuckern, Pflanzenprotein und Stabilisator, wobei die Mischung hergestellt wird durch:

      (i) Kombination von mindestens einem der folgenden Stoffe: Zuckern und/oder Pflanzenprotein mit Wasser; und dann
      (ii) Zugabe von Stabilisator; und dann
      (iii) gegebenenfalls Zugabe von restlichen Zuckern und/oder Pflanzenprotein;

   (b) Kombination der Mischung von Zuckern, Pflanzenprotein und Stabilisator mit Fett und Emulgieren, um die konzentrierte Vormischung zu bilden.

10. Verfahren nach Anspruch 9, wobei die Mischung des Schritts (a) hergestellt wird durch:

    (i) Kombination von mindestens einem Teil des Pflanzenproteins mit Wasser, dann Zugabe von mindestens einem Teil der Zucker; und dann
    (ii) Zugabe von Stabilisator; und dann
    (iii) gegebenenfalls Zugabe von restlichen Zuckern und/oder Pflanzenprotein.

11. Verfahren nach Anspruch 9 oder Anspruch 10, wobei das gesamte Pflanzenprotein im Schritt (i) mit Wasser kombiniert wird.

12. Verfahren zur Herstellung eines gefrorenen Konfekts auf Pflanzenbasis, wobei die konzentrierte Vormischung nach irgendeinem der Ansprüche 1 bis 7 mit Wasser verdünnt und gefroren wird.

13. Verfahren nach Anspruch 12, wobei das Verhältnis von konzentrierter Vormischung zu Wasser 1:1 bis 1:3 beträgt.

14. Verwendung einer Vorrichtung mit einer Rotor-Stator-Mischeinrichtung zur Herstellung einer konzentrierten Vormischung nach irgendeinem der Ansprüche 1 bis 7.

**Revendications**

1. Emulsion concentrée huile dans l'eau pour préparer une confiserie glacée à base de plantes, dans laquelle le prémélange concentré est une émulsion huile dans l'eau sous forme liquide comprenant :

   • des matières grasses en une quantité de 8 % en poids à 20 % en poids ;
   • des sucres en une quantité de 42 % en poids à 64 % en poids ;
   • des protéines végétales en une quantité de 1,5 % en poids à 5 % en poids ;
   • un stabilisant en une quantité de 0,3 % en poids à 1,2 % en poids, lequel stabilisant est choisi dans le groupe constitué par les alginates, la carraghénane, la gomme de caroube, la gomme de guar, la pectine, la gomme xanthane, la carboxyméthylcellulose sodique, et leurs mélanges ;
   • de l'eau en une quantité de 16 % en poids à 36 % en poids.

2. Prémélange concentré selon la revendication 1, lequel prémélange concentré comprend des matières grasses en une quantité de 10 % en poids à 18 % en poids.

3. Prémélange concentré selon la revendication 1 ou la revendication 2, lequel prémélange concentré comprend des sucres en une quantité de 42 % en poids à 60 % en poids.

4. Prémélange concentré selon l'une quelconque des revendications 1 à 3, dans lequel les protéines végétales sont choisies parmi : les protéines de haricot, les protéines de lentille, les protéines de lupin, les protéines de pois, les protéines de soja, les protéines d'avoine, les protéines de blé, les protéines de seigle, les protéines d'orge, les protéines de riz, les protéines de sarrasin, les protéines de millet, et leurs mélanges.

**5.** Prémélange concentré selon l'une quelconque des revendications 1 à 4, lequel prémélange concentré comprend de plus un émulsifiant en une quantité de 0,1 % en poids à 2 % en poids.

**6.** Prémélange concentré selon l'une quelconque des revendications 1 à 5, lequel prémélange concentré comprend de l'eau en une quantité de 18 % en poids à 30 % en poids.

**7.** Prémélange concentré selon l'une quelconque des revendications 1 à 6, dans lequel le rapport des protéines végétales aux matières grasses est de 1/3 à 1/10.

**8.** Grand récipient pour vrac contenant le prémélange concentré de l'une quelconque des revendications 1 à 7, lequel grand récipient pour vrac a une capacité de réservoir allant jusqu'à 2 000 litres.

**9.** Procédé pour préparer un prémélange concentré de l'une quelconque des revendications 1 à 7, le procédé comprenant :

(a) la préparation d'un mélange de sucres, de protéines végétales, et de stabilisant, dans laquelle le mélange est préparé par :

(i) combinaison d'au moins l'un parmi :
des sucres et/ou des protéines végétales avec de l'eau ; et ensuite
(ii) addition d'un stabilisant ; et ensuite
(iii) éventuellement addition des quelconques sucres et/ou protéines végétales restants ;

(b) la combinaison du mélange de sucres, de protéines végétales et de stabilisant avec des matières grasses, et l'émulsification pour former le prémélange concentré.

**10.** Procédé selon la revendication 9, dans lequel le mélange de l'étape (a) est préparé par :

(i) combinaison d'au moins une portion des protéines végétales avec de l'eau, puis addition d'au moins une portion des sucres ; et ensuite
(ii) addition d'un stabilisant ; et ensuite
(iii) éventuellement addition des quelconques sucres et/ou protéines végétales restants.

**11.** Procédé selon la revendication 9 ou la revendication 10, dans lequel la totalité des protéines végétales est combinée avec de l'eau dans l'étape (i).

**12.** Procédé pour préparer une confiserie glacée à base de plantes, dans lequel le prémélange concentré de l'une quelconque des revendications 1 à 7 est dilué avec de l'eau et congelé.

**13.** Procédé selon la revendication 12, dans lequel le rapport du prémélange concentré à l'eau est de 1/1 à 1/3.

**14.** Utilisation d'un appareil comprenant un dispositif de mélange à rotor-stator pour préparer un prémélange concentré de l'une quelconque des revendications 1 à 7.

# Fig. 1a

# Fig. 1b

## Fig. 2a

## Fig. 2b

## Fig. 2c

20 µm

## Fig. 2d

20 µm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1415542 A1

**Non-patent literature cited in the description**

- **H. DOUGLAS GOFF** ; **RICHARD W. HARTEL**. Ice Cream. 2013